# FASCICULE DE BREVET EUROPEEN

(11) **EP 0 616 479 B1**
(45) Date de publication et mention de la délivrance du brevet: **19.04.2000**
(21) Numéro de dépôt: 94400558.6
(22) Date de dépôt: 15.03.1994
(51) Int. Cl.: H04L 12/42, H04Q 3/66

(54) **Procédé de reconfiguration d'un réseau maillé**
Verfahren zur Neukonfigurierung eines Maschennetzwerks
Reconfiguration method for a mesh network

(30) Priorité: 19.03.1993 FR 9303204
(43) Date de publication de la demande: 21.09.1994
(73) Titulaire: THOMSON-CSF, 75008 Paris (FR)
(72) Inventeur: Millet, Guy, F-92402 Courbevoie Cedex (FR); Gillet, Vincent, F-92402 Courbevoie Cedex (FR)
(74) Mandataire: Courtellemont, Alain

(56) Documents cités:
- EP-A- 0 400 879
- WO-A-84/02244
- WO-A-93/00756
- INTERNATIONAL CONFERENCE ON COMMUNICATIONS, vol.3, 14 Juin 1992, CHICAGO (US) pages 1659 - 1664, XP337981 OKANOUE ET AL 'Sonet self-healing networks for STS-1/Nc path restoration'
- IEEE CONFERENCE ON COMPUTER COMMUNICATIONS INFOCOM, 27 Mars 1988, NEW ORLEANS (US) pages 264 - 273, XP40239 KHIEM VAN LE ET AL 'Fault-Tolerant Routing in a Class of Double Loop Networks'
- IEEE GLOBAL TELECOMMUNICATIONS CONFERENCE, vol.1, 6 Décembre 1992, ORLANDO (US) pages 633 - 638, XP357854 W.D. GROVER ET AL 'Case Studies of Survivable Ring, Mesh and Mesh-Arc Hybrid Networks'
- IEEE COMMUNICATIONS MAGAZINE, vol.23, no.11, Novembre 1985, NEW YORK (US) pages 26 - 39 J. PRISCO ET AL 'Fiber Optic Regional Area Networks'
- PATENT ABSTRACTS OF JAPAN vol. 014, no. 336 (E-0953) 19 Juillet 1990 & JP-A-02 113 741 (NEC CORP) 25 Avril 1990

## Description

La présente invention concerne, dans les systèmes de télécommunication à multiplex temporel, les réseaux maillés faits de noeuds et conçus pour échanger des signaux d'information par des artères reliant ces noeuds entre eux. La présente invention concerne plus précisément un procédé de reconfiguration d'un réseau maillé ; il est rappelé que la reconfiguration d'un réseau maillé est la technique qui, lorsqu'un réseau maillé est partiellement défectueux et donc que la diffusion des signaux ne se fait plus correctement, consiste à modifier le routage des signaux pour assurer, dans la mesure du possible, leur diffusion vers tout noeud non défectueux du réseau auquel ils sont destinés.

Avec un réseau se limitant à une boucle faite de noeuds et d'artères alternées, il est connu de disposer d'artères faites d'une liaison primaire et d'une liaison secondaire et d'isoler les parties défaillantes en reliant entre elles la liaison primaire et la liaison secondaire de chacune des artères situées au plus proche des parties défectueuses de la boucle ; la diffusion qui s'effectuait en utilisant uniquement les liaisons primaires avant qu'apparaissent la ou les défectuosités, s'effectue alors selon un trajet utilisant les liaisons primaires dans un sens et les liaisons secondaires dans le sens contraire ; cette technique qui a été appelée reconfiguration par boucle contre-réactive présente l'inconvénient, dès qu'il y a plus d'une défectuosité, de scinder le réseau en autant de sous-réseaux indépendants les uns des autres qu'il y a de défectuosités distinctes.

Il est également connu d'employer un réseau dans lequel les artères sont, en permanence, bi-directionnelles et où le nombre d'artères susceptibles d'aboutir à un noeud n'est pas limité ; la reconfiguration consiste alors, si par exemple un noeud donné est en panne, à faire transiter par les noeuds entourant le noeud donné les signaux d'information qui auraient, en fonctionnement normal, transité par le noeud donné ; il en résulte une surcharge des noeuds entourant le noeud donné et cette surcharge peut conduire à la saturation voire à la panne des noeuds concernés.

Dans le même esprit que les arts connus mentionnés ci-avant il faut citer un article paru dans INTERNATIONAL CONFERENCE ON COMMUNICATIONS 92 du 14 juin 1992, pages 1659 à 1664. Cet article décrit une méthode de restauration de chemins dans un réseau, basée sur les principes suivants : - pré-réservation des débits nécessaires pour, en cas de reconfiguration, pouvoir transmettre entre les noeuds à la fois le trafic normal et celui amené par la reconfiguration - reconstitution des chemins réalisée au cas par cas c'est-à-dire en fonction de chaque liaison à établir entre utilisateurs. Cette méthode nécessite une forte capacité de transmission du fait de la pré-réservation et cette capacité, qui n'est que très incomplètement employée en fonctionnement normal, coûte cher ; de plus la reconstitution des chemins, telle qu'elle est pratiquée, entraîne un fonctionnement dont la complexité augmente avec le nombre de noeuds du réseau étant donné, en particulier, que les informations circulent sur divers chemins et dans toutes les directions.

La présente invention a pour but d'éviter ou pour le moins de réduire les inconvénients précités.

Ceci est obtenu, dans un réseau maillé conçu à cet effet à l'aide d'éléments connus convenablement agencés, en procédant, lorsque des défectuosités apparaissent, à un regroupement des noeuds non défectueux au moyen d'artères de secours prévues à cet effet et qui, en fonctionnement normal du réseau ne sont pas utilisées ; le procédé consiste ensuite à optimiser le nouveau réseau afin de réaliser une diffusion des signaux d'information selon un chemin unique c'est-à-dire un chemin dans lequel, quel que soit le point considéré, un signal ne peut venir que d'une seule direction.

Pour cela la présente invention a pour objet un procédé de reconfiguration d'un réseau maillé tel que décrit, en particulier, dans la revendication 1 du présente document

Plus éloignés des préoccupations de la présente invention que l'article discuté plus avant, deux autres documents peuvent toutefois être mentionnés : un article IEEE CONFERENCE ON COMPUTER COMMUNICATIONS INFOCOM 27 mars 1988, pages 264 à 273 et la demande PCT WO 84/02244. L'article IEEE concerne des réseaux à structure à double boucle dans lesquels des messages sont diffusés qui vont déterminer le chemin à utiliser pour aller d'un point à un autre du réseau et dans lesquels les deux éléments de la double boucle sont utilisés même en fonctionnement normal. La demande PCT concerne une méthode d'utilisation d'artères doubles (aller-retour), dans un réseau maillé, pour simplifier la fonction de routage par constitution d'une boucle logique.

La présente invention sera mieux comprise et d'autres caractéristiques apparaîtront à l'aide de la description ci-après et des figures s'y rapportant qui représentent :
- la figure 1, le schéma d'un réseau pour la mise en oeuvre du procédé selon l'invention, avec l'ensemble des liaisons reliant les noeuds de ce réseau,
- la figure 2, le schéma du réseau de la figure 1 avec les seules liaisons employées en fonctionnement normal, c'est-à-dire sans aucun élément en panne dans le réseau,
- la figure 3, le schéma du réseau de la figure 1 après qu'il ait été endommagé,
- la figure 4, le schéma de la figure 3 mais avec les courbures de certains traits modifiées,
- la figure 5, le schéma du réseau endommagé des figures 3 et 4 après qu'il ait été reconfiguré,
- les figures 6a à 6e, les schémas relatifs à des aiguillages internes aux noeuds de la figure 5.

Sur les différentes figures les éléments correspondants sont désignés par les mêmes repères.

Le procédé de reconfiguration qui va être décrit nécessite, pour sa mise en oeuvre, un réseau présentant un certain nombre de caractéristiques structurelles qui seront présentées dans le courant de la description et dont l'utilisation apparaîtra dans le cas de reconfiguration qui sera donné à titre d'exemple.

Le procédé de reconfiguration concerne les réseaux comportant une maille formée de noeuds reliés entre eux par des artères pour échanger des signaux d'information, tels que, par exemple, des signaux téléphoniques ; ces signaux peuvent être également dirigés d'un noeud vers un organe périphérique relié au noeud considéré. Par noeud il faut entendre ici un ensemble comportant de manière classique : des accès pour recevoir ou délivrer des signaux et une unité de gestion avec micro-ordinateur pour commander l'aiguillage des signaux à l'intérieur du noeud et assurer, selon le signal considéré, soit son élaboration, soit son traitement, soit son simple transfert ; et il est entendu qu'un raccordement entre deux accès peut être effectué sans passer par l'unité de gestion ou, au moins, sans que le signal d'information ne soit modifié lors de son passage dans le noeud. Par artère dans un réseau maillé il faut entendre l'ensemble des liaisons reliant directement l'accès d'un noeud à l'accès d'un autre noeud, si bien que, quand à la phrase précédente il est question d'aiguillage de signaux, chaque liaison aboutissant sur un accès ou en partant est à considérer séparément.

Le réseau pour la mise en oeuvre du procédé est fait de noeuds comportant au plus trois accès et d'artères comportant exclusivement une liaison primaire et une liaison secondaire destinées à la transmission de signaux dans deux sens opposés. De plus, en fonctionnement normal, le réseau présente une maille, appelée boucle, avec au moins trois noeuds dans la boucle, dont un qui a un rôle dirigeant et sera appelé pilote ; les autres noeuds du réseau, s'il en existe, sont reliés par des artères à un seul des noeuds de la boucle ; des artères, dites artères de secours, sont disposées en parallèle sur une partie de la boucle dont elles relient deux des noeuds ; du fait que les noeuds ont au plus trois accès, un noeud de la boucle ne peut à la fois être relié par une artère de secours à un autre noeud de la boucle et par une autre artère à un noeud ne faisant pas partie de la boucle.

Il est à noter que, du fait du genre de réseau auquel s'applique le procédé de reconfiguration dont il vient d'être question, le nombre d'artères de secours doit au minimum être égal à 1 et est au plus égal à la moitié des n noeuds de la boucle principale si n est pair et à la moitié de n-1 si n est impair, à condition toutefois qu'il n'y ait pas d'artères latérales étant donné que seuls des noeuds à trois accès sont utilisés.

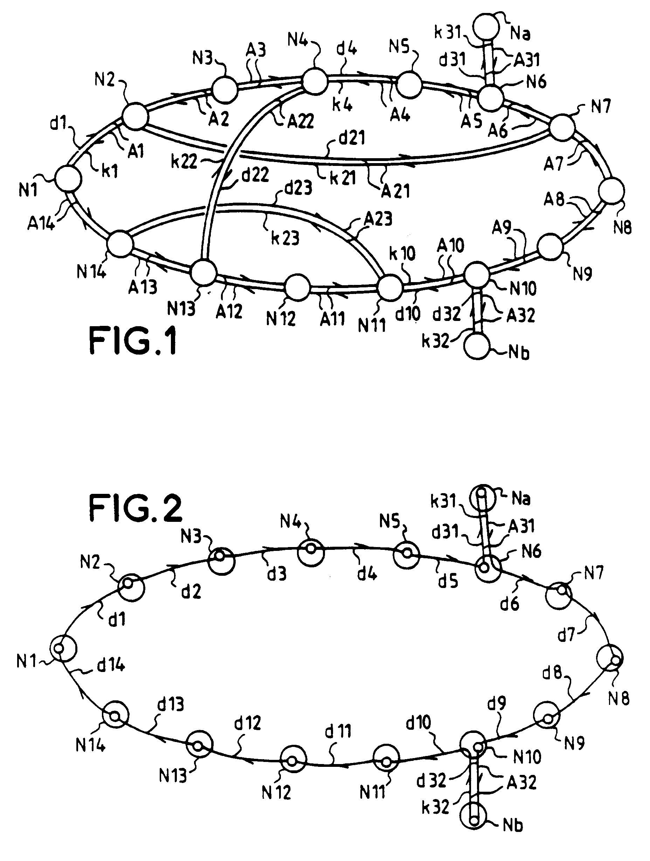

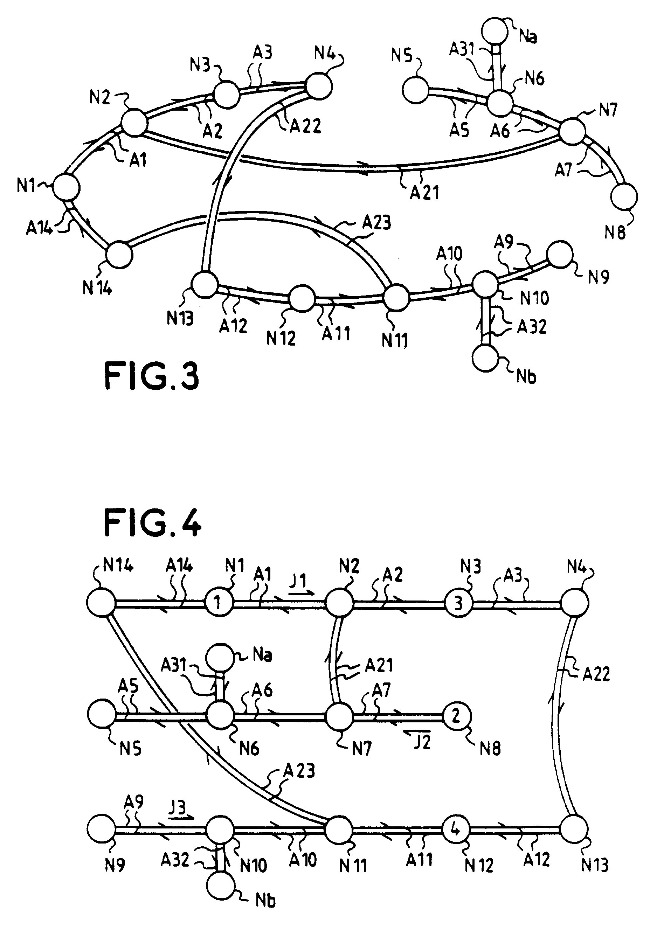

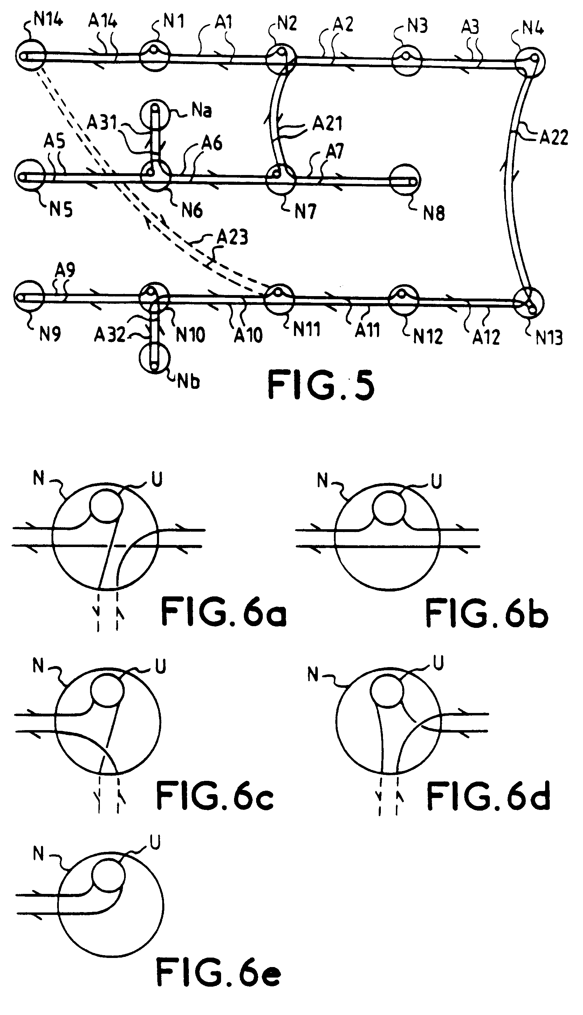

La figure 1 est un schéma d'un réseau conçu selon les critères indiqués ci-avant pour permettre la mise en oeuvre d'un procédé de reconfiguration. Les différentes étapes de ce procédé vont être décrites en montrant comment, lorsqu'un fonctionnement normal selon le schéma de la figure 2 n'est plus possible en raison de perturbations indiquées sur la figure 3, il y a moyen d'obtenir un fonctionnement correct du réseau selon le schéma de la figure 5.

La figure 1 représente un réseau maillé comportant une boucle faite de quatorze noeuds principaux de communication N1 à N14 reliés par artères principales A1 à A14, où l'artère Ai avec i compris entre 1 et 13 relie le noeud Ni au noeud Ni+1 et où l'artère A14 relie le noeud N14 au noeud N1. Trois artères de secours A21, A22, A23 relient respectivement les noeuds N2-N7, N4-N13 et N11-N14. Deux noeuds latéraux Na, Nb, situés hors de la boucle, sont reliés par des artères latérales, A31, A32 respectivement aux noeuds N6 et N10.

Quelle que soit l'artère Ai considérée parmi les dix neuf artères mentionnées ci-avant, elle est constituée de deux liaisons di, ki, dites respectivement primaire et secondaire, ayant des sens de transmission de signaux opposés ; ces sens sont indiqués par des demi-flèches et, dans la boucle les liaisons primaires di, avec i=1 à i=14, sont disposées dans le sens de rotation des aiguilles d'une montre. Sur la figure 1, comme sur les figures 2 à 5, les références des artères et des liaisons ne sont pas toutes indiquées de manière à alléger le dessin.

La figure 2 est un schéma sur lequel seules sont représentées les liaisons qui sont utilisées, lors d'un fonctionnement normal du réseau, pour la transmission des signaux multiplex. Sur cette figure comme sur certaines des figures suivantes les unités de gestion des noeuds sont représentées par un petit cercle à l'intérieur du cercle de plus grand diamètre qui symbolise un noeud ; ceci permet de montrer comment s'effectuent les aiguillages des signaux à l'intérieur des noeuds sous la commande de l'unité de gestion du noeud considéré : soit passage directe, I'unité de gestion n'ayant qu'un rôle de contrôle auquel cas l'aiguillage du signal entre son entrée et sa sortie du noeud est, par convention, dessiné sans traversée de l'unité de gestion, soit passage avec traitement du signal dans l'unité de gestion auquel cas l'aiguillage du signal est dessiné avec traversée de l'unité de gestion.

Comme il ressort de la figure 2 les artères de secours ne sont pas utilisées en fonctionnement normal, les deux liaisons des artères latérales A31, A32 sont utilisées et seules les liaisons primaires, d1 à d14, des artères principales sont utilisées. Un signal arrivant sur un noeud est aiguillé vers l'unité de gestion du noeud pour y être traité et le signal de sortie de l'unité de gestion est aiguillé sur une sortie du noeud ; toutefois, dans le cas des noeuds principaux N6 et N10 qui sont reliés respectivement aux noeuds latéraux Na, Nb, si le signal d'information vient du noeud voisin en amont dans la boucle, à savoir respectivement de N5 et N9, il est traité par l'unité de gestion pour être aiguillé vers le noeud latéral, par contre, si le signal revient du noeud latéral, il est transmis avec simple contrôle par l'unité de gestion au noeud en aval, à savoir respectivement à N7 et N11. Avec une structure selon la figure 2 il apparaît que, quel que soit le noeud considéré, il ne reçoit pour traitement que des signaux d'information provenant en direct d'un seul autre noeud et qu'au plus il reçoit en direct des signaux d'information de deux noeuds différents. Dans ce qui suit il va être montré comment malgré des ruptures d'artères principales le réseau peut, au moins dans certains cas, être reconfiguré pour qu'à nouveau un noeud n'ait jamais à traiter des signaux d'information provenant en direct de plus d'un noeud, c'est-à-dire comment le réseau peut être reconfiguré pour présenter une structure avec toutes les unités de gestion des noeuds en cascade.

La figure 3 est un schéma correspondant au réseau de la figure 1 mais dans lequel les artères principales A4, A8 et A13 étant défectueuses, n'ont pas été représentées. Il est à noter que si un ou plusieurs noeuds avaient été défectueux sur la figure 3 ce ou ces noeuds n'auraient pas été représentés ainsi que les artères aboutissant à chaque noeud défectueux, ces artères étant alors considérées comme défectueuses.

La figure 4 est un schéma qui correspond à celui de la figure 3 mais où les trois tronçons de réseau découpés dans la boucle par les défectuosités des artères A4, A8 et A13, ont été représentés selon des segments de droites parallèles horizontales, où les deux artères latérales A31, A32 ont été représentées comme des segments de droites verticaux et où les trois artères de secours ont été représentées comme des courbes afin de les distinguer facilement des autres artères. Cette représentation va permettre de mieux comprendre l'idée à la base du procédé de reconfiguration de réseau et ensuite d'expliquer une façon de mettre ce procédé en oeuvre.

Dans la mesure où, comme c'est le cas sur la figure 4, il y a suffisamment de liaisons de secours en état de fonctionner pour relier entre eux directement ou indirectement les tronçons de réseau il est possible, comme cela est représenté sur la figure 4, de définir une reconfiguration du réseau endommagé qui dispose en cascade toutes les unités de gestion des noeuds. Ceci va nécessiter d'utiliser les liaisons secondaires des artères principales et de secours et de ne garder que le nombre strictement nécessaire d'artères de secours sinon il apparaîtrait des redondances dans le chemin que doivent emprunter les signaux d'information pour transiter par tous les noeuds du réseau. Or, comme le montre la figure 5, dans une structure faite de tronçons de réseau couplés entre eux par des artères de secours il suffit pour éviter les redondances de ne garder qu'un nombre d'artères de secours inférieur d'une unité au nombre des tronçons.

Sur la figure 5, comme cela avait été le cas pour la figure 2, à l'intérieur du cercle représentant un noeud sont dessinés un cercle représentant l'unité de gestion du noeud et des lignes représentant les aiguillages des signaux d'information à l'intérieur du noeud.

Dans l'exemple décrit les aiguillages sont systématiquement réalisés comme représenté sur les figures 6a à 6e qui correspondent respectivement à :
- un noeud avec trois artères en fonctionnement, que la troisième soit une artère latérale ou une artère de secours,
- un noeud avec deux artères principales en fonctionnement,
- un noeud avec l'artère principale amont et une artère de secours ou latérale en fonctionnement,
- un noeud avec l'artère principale aval et une artère de secours ou latérale en fonctionnement,
- un noeud avec une seule artère en fonctionnement, et si, sur cette figure, c'est une artère principale amont qui est représentée, l'aiguillage se fera de façon semblable pour toute autre artère à savoir avec la liaison primaire et la liaison secondaire reliées respectivement aux deux accès de l'unité de gestion du noeud.

Sur ces figures les noeuds sont désignés par la référence N et leur unité de gestion par la référence U, et pour distinguer les artères principales des autres artères ces dernières sont dessinées en traits interrompus, mais pour toutes les liaisons représentées le sens de conduction a été indiqué par une demi flèche. Il est à noter que, dans les figures 6a à 6d où il y a plus d'un accès, les règles appliquées sont : une liaison primaire d'une artère amont va à l'unité de gestion, une liaison secondaire d'une artère de secours ou d'une artère latérale vient de l'unité de gestion, la liaison primaire d'une artère aval ne vas à l'unité de gestion que s'il n'y a pas d'artère amont. Bien entendu des règles différentes peuvent être établies pour remplacer sur les figures 6a à 6d les liaisons primaires par des liaisons secondaires et vice versa.

Dans ce qui suit une façon de procéder pour reconfigurer un réseau endommagé est décrite.

Dans un réseau maillé en fonctionnement tel que celui des figures 2 ou 5 un noeud, choisi parmi les noeuds principaux, pilote les échanges entre les noeuds en délivrant les autorisations d'émettre des messages. De plus il existe parmi les autres noeuds principaux des noeuds également capables de faire fonction de pilote ; à tous ces noeuds pilote ou susceptibles d'être pilotes est affectée une priorité, jamais la même pour deux noeuds. Et il est à noter que, dans cette reconfiguration, les noeuds latéraux ne sont jamais susceptibles d'être pilotes.

Le rôle de la reconfiguration est non seulement de déterminer un nouveau chemin où les unités de gestion seront toutes en cascade mais également de choisir un noeud et un seul pour jouer le rôle de pilote ; cela pourra être le noeud pilote du réseau en fonctionnement normal sauf bien entendu si ce noeud est endommagé. Ce choix du noeud pilote comme d'ailleurs le choix du nouveau chemin s'effectue par un échange de messages entre les noeuds principaux. Mais tout d'abord chaque noeud qui ne reçoit plus, pendant un temps prédéterminé, de signal multiplex sur un de ses accès en déduit qu'il se passe quelque chose d'anormal et court-circuite l'accès considéré ; c'est le cas pour les noeuds des figures 3 et 4 qui avaient chacun un accès sur lequel aboutissait l'une des artères A4, A8 ou A13 représentées sur la figure 1 ; c'est le phase préliminaire au cours de laquelle chaque noeud en état de fonctionner teste ses accès et se prépare à fournir sa priorité et son adresse s'il est susceptible de devenir noeud pilote.

Dans chaque tronçon est alors effectuée une recherche, parmi les noeuds susceptibles d'être pilote, de celui auquel est affectée la priorité de niveau le plus élevé. Ainsi parmi les noeuds candidats pilote, s'il en existe dans le tronçon considéré, est sélectionné un noeud candidat pilote dont la priorité est alors comparée, par les liaisons de secours, à la priorité des noeuds candidats pilote sélectionnés dans les autres tronçons et progressivement sont éliminées les candidatures à la fonction de pilote des noeuds dont les priorités sont les plus faibles pour finalement ne conserver plus qu'un noeud qui prend le rôle de pilote. Les redondances dont il a été question plus avant sont évitées en ne conservant, si nécessaire, que k-1 artères de secours, k représentant ici le nombre des tronçons du réseau initial susceptibles d'être reconfigurés car formant un groupe dans lequel les tronçons sont reliés entre eux par les artères de secours.

Un exemple non limitatif de mise en oeuvre du procédé décrit ci-avant, est donné dans ce qui suit.

Dans cet exemple des signaux qui seront dits jetons circulent dans chaque tronçon pour, par échange d'informations entre les noeuds du tronçon, déterminer s'il en existe un noeud susceptible d'être pilote et de priorité maximale dans le tronçon ; si une telle priorité est trouvée elle est proposée pour comparaison aux autres tronçons directement reliés par une artère de secours, à moins qu'un de ces autres tronçons ait trouvé avant son noeud de priorité maximale et l'ait proposée pour comparaison.

Quand, sur un tronçon, plusieurs noeuds sont en attente de réponse à une demande de comparaison, le jeton continue de circuler pour qu'y soient inscrites toutes les réponses et que les noeuds du tronçon puissent prendre des décisions en conséquence. Mais pour cette prise de décision dans un noeud il faut que toutes les réponses soient reçues ; une partie du jeton est constituée à cet effet en compteur dont la valeur est incrémentée d'une unité par chaque noeud qui a émis une demande de comparaison de priorité sur une artère de secours et décrémenté d'une unité quand une réponse a été reçue. Sur la figure 4 des demi-flèches associées à des repères J1, J2, J3 symbolisent les jetons circulant respectivement dans les tronçons N14-N4, N5-N8 et N9-N13.

Les noeuds ont la possibilité d'intervenir sur le contenu du jeton et d'émettre des signaux de comparaison, de répondre à une demande de comparaison et d'envoyer des signaux qui sont dits de synchronisation. De plus chaque noeud a la possibilité de se mettre en transparence c'est-à-dire de ne plus intervenir sur les jetons qui le traverse et d'attendre la reprise de l'envoi des signaux multiplex précédée d'un signal de synchronisation générale émis par le noeud pilote de priorité maximale dans le réseau reconfiguré.

Pour bien faire comprendre comment cette reconfiguration a lieu, ses différentes étapes vont être décrites en considérant le réseau à reconstituer des figures 3, 4, avec quatre noeuds candidats pilotes N1, N3, N8 et N12 avec priorités de valeurs respectives 1, 3, 2 et 4 ce qui signifie que ce sera finalement le noeud N12 qui sera choisi comme pilote du réseau reconfiguré ; pour faciliter la compréhension les valeurs de priorité ont été indiquées, sur la figure 4, dans les cercles représentant les noeuds candidats.

Peu après que le réseau selon la figure 2 ait été endommagé entraînant l'arrêt de la circulation de signaux multiplex, les noeuds N14, N5, N9 se mettent en rebroussement amont et les noeuds N4, N8, N13 en rebroussement aval ce qui consiste à créer des tronçons de réseau tels que celui qui va de N14 à N4 et dans lesquels va circuler un jeton par les liaisons primaires des artères principales dans un sens et par les liaisons secondaires des artères principales dans l'autre sens.

Les noeuds qui ne sont ni candidats pilote, ni en rebroussement aval, ni reliés à une liaison de secours, se mettent en transparence et sont connectés aux artères comme indiqué sur la figure 6a pour N6 et N10 et comme indiqué sur la figure 6e pour Na et Nb ; ils peuvent donc être oubliés dans la suite de la reconfiguration.

L'arrêt du signal multiplex déclenche une temporisation dans chaque noeud, au cours de laquelle le noeud teste ses accès, organise ses aiguillages internes, se prépare à fournir son adresse et sa priorité ou se met en transparence ; pour cela tout signal qui arrive sur le noeud, quel que soit l'accès par lequel il arrive, est pris en compte par l'unité de gestion du noeud.

Quand la temporisation est terminée chacun des noeuds en rebroussement amont, N14, N5, N9 envoie un jeton avec son adresse, mais sans priorité puisqu'aucun de ces trois noeuds est candidat pilote dans l'exemple décrit.

Le jeton du premier tronçon, N14-N4, arrive par la liaison primaire de l'artère A14 sur N1 ; N1 étant candidat de priorité 1, met son adresse à la place de celle de N14 et indique sa priorité 1 dans le jeton ; le jeton est alors dit confirmé par inscription d'une priorité. Le jeton traverse N2 non candidat, arrive sur N3 qui, étant candidat de priorité supérieure à 1, met son adresse à la place de celle de N1 et indique sa priorité 3 dans le jeton à la place de la priorité qui y figurait. Le jeton continue son tour dans le tronçon : traversée de N4 sans modifications à apporter au jeton puisque N4 n'est pas candidat pilote - traversée de N3, N2, N1 sans traitement du fait que le trajet s'effectue par la liaison secondaire des artères principales - traversée de N1 qui passe en transparence du fait que la priorité de N1 est inférieure à celle contenue dans le jeton et du fait qu'aucune artère de secours aboutit sur N1 - traversée de N2 - arrivée à N3. L'étude des artères de secours a lieu en même temps que l'opération de recherche de la priorité maximum dans le tronçon N14-N4. Pour cela, chaque fois qu'un jeton confirmé passe par un noeud où aboutit une artère de secours, une demande de comparaison de sa priorité est envoyée par l'artère de secours au tronçon situé à l'autre extrémité de cette artère de secours. Ainsi le jeton confirmé par N1, quand il passe par N2, déclenche à travers l'artère de secours A21 une demande de comparaison de sa priorité de valeur 1 ; quand le jeton passe par N4 il déclenche à travers l'artère A22 une demande de comparaison de sa priorité de valeur 3 donnée par le noeud N3 ; puis, quand le jeton arrive de N4 sur N2, après avoir traversé N3, il provoque à travers l'artère de secours A21 une nouvelle demande de comparaison de priorité mais cette fois ci de valeur 3 alors que précédemment elle était de valeur 1. Quand le jeton passe par N14 il déclenche à travers l'artère A23 une demande de comparaison de valeur 3. A chacune de ces demandes de comparaison correspond l'incrémentation d'une unité du compteur qui est alors ajouté au jeton. Ce compteur est remis à zéro à chaque fois qu'une priorité y est inscrite ; ainsi l'inscription par N3 de la priorité 3 remet le compteur à zéro alors qu'il était à 1 ; donc, après l'émission de la demande de comparaison de priorité par N14, le compteur est à 3.

Il faut noter que dans les deux autres tronçons N5-N8 et N9-N13 les opérations de recherche de la plus grande priorité et de demandes de comparaison ont été menées de la même manière et en parallèle.

Il va maintenant être supposé que les jetons confirmés par N3, N8 et N12 sont confirmés dans le temps, dans l'ordre suivant : d'abord N3, puis N8, puis N12.

Quand le jeton confirmé par N8 est élaboré et qu'il arrive au noeud N7, sa priorité de valeur 2 est comparée avec la priorité de valeur 3 arrivée par l'artère A21. Ce jeton ne comportant pas de compteur et sa priorité 2 étant inférieure à la priorité 3, le noeud N7, après avoir effectué la comparaison, envoie vers N2 un signal d'acceptation de priorité supérieure et modifie le jeton en y introduisant son adresse et une information indiquant qu'une priorité supérieure existe dans un autre tronçon ; ce jeton modifié par N7 fait passer successivement les noeuds N8, N5, N6 et N7 en transparence dans la mesure où ils ne l'étaient pas déjà et le noeud N7 organise son aiguillage interne comme indiqué sur la figure 6a.

Le noeud N2 reçoit donc le signal d'acceptation de priorité par l'artère A21 et, quand le jeton qui circule dans le tronçon N14-N4 arrive dans l'unité de gestion de N2, celle-ci décrémente d'une unité le compteur qui passe ainsi de 3 à 2.

Quand le jeton confirmé par N12 est élaboré et qu'il arrive aux noeuds N13 puis N11, sa priorité de valeur 4 est comparée avec la priorité de valeur 3 arrivée respectivement par les artères A22 et A23. Ce jeton confirmé ne comportant pas de compteur et sa priorité 4 étant supérieure à la priorité 3, les noeuds N13 et N11, après avoir effectué la comparaison envoient respectivement vers les noeuds N4 et N14 un signal de refus de priorité, avec la valeur de cette nouvelle priorité ; de plus ce jeton entraîne la mise en transparence de tous les noeuds du tronçon N9-N13 autre que le noeud N12 de priorité maximale dans le tronçon ; il est à noter que si des noeuds du tronçon N9-N13 avaient été en attente de réponse à une demande de comparaison ils n'auraient pas, eux non plus, été mis en transparence.

Le jeton qui circulait dans le tronçon N14-N4 comportait, comme indiqué plus avant, l'adresse du noeud N3, la valeur de priorité 3 et un compteur 2. Il va maintenant être supposé que ce jeton passe dans N14 avant que le refus de priorité ait été communiqué par l'artère A23 mais passe dans le noeud N4 après que le refus de priorité ait été communiqué par l'artère A22. Dans ce cas le jeton est modifié par l'unité de gestion du noeud N4 qui y inscrit son adresse, la priorité de valeur 4 qui lui a été transmise par l'artère A22 et une information montrant que cette priorité provient d'un autre tronçon que N14-N4 ; de plus le compteur du jeton est, non pas décrémenté simplement d'une unité bien qu'il ait été seulement répondu à la demande de comparaison de priorité effectuée à partir de N4, mais est remis à zéro parce qu'il a été répondu par une priorité supérieure. Quand ce jeton modifié arrive au noeud N14 sa valeur 4 de priorité est comparée à la valeur 4 de priorité reçue par l'unité de gestion de N14 à travers l'artère A23 et qui était associée au refus de priorité ; les deux valeurs étant égales cela signifie qu'il y a redondance et pour éviter cette redondance le noeud N14 supprime la liaison par l'artère A23. Le noeud N14 envoie le jeton puis passe en transparence étant donné qu'il n'attend plus de réponse et que le compteur est à zéro. Ce jeton traverse les noeuds N1, N2, N3 qui étaient déjà en transparence et atteind N4 qui y reconnaît son adresse et retrouve le compteur à zéro ; le noeud N4 en déduit que l'opération de synchronisation se termine, organise son aiguillage interne selon la figure 6c et envoie un signal de synchronisation qui est transmis à l'ensemble des noeuds du réseau et en particulier aux noeuds N2, N7, N13 qui organisent alors leurs aiguillages internes respectivement selon les figures 6a, 6a et 6d. La reconfiguration est terminée, le réseau se présente comme indiqué sur la figure 5 et le noeud N12 peut envoyer un signal de synchronisation générale.

Dans le cas d'une reconfiguration qui, suite à des modifications ou à des réparations, s'effectue sur un réseau comportant une boucle complète comme la boucle selon la figure 1, le procédé de reconfiguration, tel qu'il vient d'être décrit, ne peut fonctionner puisque le réseau ne dispose pas de noeuds en rebroussement si bien qu'il ne peut y avoir d'émission d'un jeton par un noeud en rebroussement amont. Pour pallier cette possible carence, le noeud qui était précédemment noeud pilote, ou un noeud présélectionné à cet effet, émet un pré-jeton ; dans le cas d'un réseau défectueux, c'est-à-dire sans boucle principale, le pré-jeton est supprimé par le noeud en rebroussement aval ; dans le cas d'un réseau avec boucle principale ce pré-jeton effectue le tour complet de la boucle pour revenir à son noeud d'origine où il est transformé en jeton et ce jeton a, par la suite, le même comportement qu'un jeton émis par un noeud en rebroussement amont : échange de demandes de comparaisons de priorités par les artères de secours, élimination des artères de secours redondantes qui s'avèrent être, dans le cas d'une boucle principale, toutes les artères de secours, et élection du futur pilote.

Des variantes ainsi que d'autres façons de faire peuvent être envisagées pour reconfigurer un réseau tel que défini au début de ce document afin d'obtenir un réseau où toutes les unités de gestion sont disposées sur une même boucle, donc sans redondances. Par exemple il est possible d'attendre d'avoir trouvé la priorité maximum dans un tronçon avant de déclencher les demandes de comparaison de priorité avec les autres tronçons.

Il est également possible d'effectuer une reconfiguration dans le cas d'un réseau comportant plusieurs boucles distinctes parce que distantes, mais reliées entre elles par une ou plusieurs artères de secours. Dans ce cas les caractéristiques suivantes sont nécessaires pour chaque boucle complète : existence d'au moins un noeud candidat au poste de pilote, existence d'au moins un noeud qui était précédemment pilote ou d'un noeud pré-sélectionné afin d'émettre un pré-jeton ; par contre, pour les boucles endommagées aucune de ces caractéristiques n'est requise si ce n'est qu'avec uniquement des boucles endommagées il doit exister au moins un noeud candidat pilote pour l'ensemble du réseau. Dans cette variante chaque boucle est considérée comme un tronçon de l'exemple décrit à l'aide des figures.

## Revendications

1. Procédé de reconfiguration d'un réseau maillé formé d'au moins trois noeuds et quatre artères, les noeuds comportant des accès, des priorités toutes distinctes les unes des autres pouvant être attribuées aux noeuds, le réseau étant destiné à la transmission, par les artères, de signaux entre les noeuds, et chaque artère reliant un accès d'un des noeuds à un accès d'un autre des noeuds, caractérisé en ce que chaque artère comporte une liaison primaire et une liaison secondaire, les deux liaisons d'une même artère ayant des sens de transmission de signaux opposés, en ce que la transmission dans le réseau est effectuée sous la direction d'un des noeuds dit noeud pilote en ce que le réseau étant un réseau où les noeuds comportent au plus trois accès, où n des noeuds et n des artères, avec n supérieur à 2, dits noeuds principaux (N1-N14) et artères principales (A1-A14) sont disposés en une boucle principale et où m des artères, avec m entier positif au plus égal à n/2, constituent des artères de secours (A21-A23), non employées en fonctionnement normal du réseau, entre des noeuds de la boucle principale, il consiste, lorsque des artères principales sont défectueuses, à rechercher s'il existe au moins deux tronçons (N14-N4, N5-N8, N9-N13) constitués par des parties saines de la boucle principale limitées chacune par deux des artères principales défectueuses, à rechercher s'il existe un groupe fait de k des tronçons avec k entier supérieur à 1 qui peuvent être reliés entre eux au moyen de k-1 des artères de secours et à créer un réseau reconfiguré en déterminant dans le groupe un chemin unique utilisant les k tronçons du groupe et lesdites k - 1 artères de secours (A21, A22), ce chemin unique passant une fois et au plus une fois par chacune des liaisons primaires et des liaisons secondaires de chacun des k tronçons du groupe et de chacune desdites k - 1 artères de secours.

2. Procédé de reconfiguration selon la revendication 1, caractérisé en ce qu'il consiste à rechercher dans les tronçons du groupe s'il existe des noeuds (N1, N3, N8, N12) susceptibles de prendre la direction du réseau reconfiguré et, s'il en existe, à sélectionner le noeud de priorité maximale (N12).

3. Procédé de reconfiguration selon la revendication 1, caractérisé en ce qu'il consiste à rechercher dans le groupe, troncon par tronçon (N14-N4, N5-N8, N9-N13), un noeud de priorité maximale susceptible de prendre la direction du réseau reconfiguré, à effectuer à travers les artères de secours (A21-A23) des comparaisons entre les priorités maximales des divers tronçons afin de permettre de sélectionner le noeud de priorité maximale du groupe (N12), à supprimer toutes sauf une des artères qui aboutissent à un même tronçon et par lesquelles arrive pour comparaison une même valeur de priorité.

4. Procédé de reconfiguration selon la revendication 3, caractérisé en ce qu'il consiste, dans chaque tronçon, à faire circuler un jeton (J1, J2, J3) constitué par un message dans lequel les noeuds peuvent inscrire leur adresse dans le réseau et leur priorité quand ils sont traversés par ce jeton, cette inscription se faisant en remplacement d'une inscription déjà faite dans le jeton par un noeud précédant mais n'ayant lieu que si la priorité du noeud traversé est supérieure à celle qu'indique l'inscription déjà faite dans le jeton.

5. Procédé de reconfiguration selon la revendication 4, caractérisé en ce qu'il consiste à mettre un des noeuds en transparence dès qu'il apparaît que ce noeud n'est pas susceptible de prendre la direction du réseau reconfiguré, soit du fait qu'il n'est pas candidat à cette direction soit du fait de sa position dans le réseau à reconfigurer, cette mise en transparence consistant, pour le noeud, à ne pas intervenir sur les jetons qui le traversent, et à attendre qu'un noeud pour prendre la direction du réseau reconfiguré ait été trouvé.

## Claims

1. Method for the reconfiguration of a meshed network formed by at least three nodes and four lines, the nodes having ports, it being possible to allocate quite distinct priorities to each of the nodes, the network being designed for the transmission, by the lines, of signals between the nodes, and each line connecting a port of one of the nodes to a port of another of the nodes, characterised in that each line has a primary link and a secondary link, the two links of one and the same line having opposite directions of signal transmissions, that transmission in the network is carried out under the control of one of the nodes known as the control node, and that since the network is a network in which the nodes have at most three ports, *n* of the nodes and *n* of the lines, where *n* is greater than 2, so-called main nodes (N1-N14) and main lines (A1-A14) are disposed in a main loop, and *m* of the lines, where *m* is a positive integer at most equal to *n*/2, form standby lines (A21-A23) not used when the network is operating normally, between nodes of the main loop, said method consisting, when main lines are defective, in determining whether there are at least two sections (N14-N4, N5-N8, N9-N13) constituted by non-defective parts of the main loop, each limited by two of the defective main lines, determining whether there is a group formed by *k* of the sections, where *k* is an integer greater than 1, which may be connected to one another by means of *k*-1 of the standby lines, and in creating a reconfigured network by determining, in the group, a single path using the *k* sections of the group and said *k*-1 standby lines (A21, A22), this single path passing once and no more than once through each of the primary links and secondary links of each of the *k* sections of the group and of each of said *k*-1 standby lines.

2. Method of reconfiguration according to claim 1, characterised in that it consists in performing a search, in the sections of the group, for nodes (N1, N3, N8, N12) able to take the direction of the reconfigured network, and if there are any, in selecting the node with the highest priority (N12).

3. Method of reconfiguration according to claim 1, characterised in that it consists in performing a search in the group, section by section (N14-N4, N5-N8, N9-N13), for a node with the highest priority capable of taking the direction of the reconfigured network, and making comparisons, through the standby lines (A21-A23), between the highest priorities of the different sections in order to enable the selection of the node with the highest priority of the group (N12), deleting all but one of the lines that terminate at one and the same section and via which one and the same priority value arrives for comparison.

4. Method of configuration according to claim 3, characterised in that it consists, in each section, in circulating a token (J1, J2, J3) constituted by a message in which the nodes can write their address in the network and their priority when they are traversed by said token, said record being made by replacing a record already made in the token by a preceding node but only taking place if the priority of the traversed node is higher than that indicated by the record already made in the token.

5. Method of reconfiguration according to claim 4, characterised in that it consists in putting one of the nodes into a state of transparency as soon as it appears that said node is not capable of taking the direction of the reconfigurated network, either because it is not a candidate for said direction or because of its position in the network to be reconfigured, this putting of said node into a state of transparency consisting, as far as the node is concerned, in not affecting the tokens that traverse it, and in waiting until a node to take the direction of the reconfigured network has been found.

## Patentansprüche

1. Verfahren zur Rekonfiguration eines Maschennetzes, das aus wenigstens drei Knoten und vier Leitungen gebildet ist, wobei die Knoten Zugänge besitzen, wobei den Knoten Prioritäten, die alle voneinander verschieden sind, zugewiesen werden können, wobei das Netz für die Übertragung von Signalen zwischen den Knoten über die Leitungen bestimmt ist, wobei jede Leitung einen Zugang eines der Knoten mit einem Zugang eines weiteren der Knoten verbindet, dadurch gekennzeichnet, daß jede Leitung eine primäre Verbindung und eine sekundäre Verbindung enthält, wobei die beiden Verbindungen derselben Leitung entgegengesetzte Signalübertragungsrichtungen besitzen, daß die Übertragung in dem Netz unter dem Management eines der Knoten, des sogenannten Pilotknotens, erfolgt und daß es, wenn das Netz ein Netz ist, in dem die Knoten höchstens drei Zugänge besitzen, in dem n der Knoten und n der Leitungen, n größer als 2, die Hauptknoten (N1-N14) bzw. Hauptleitungen (A1-A14) genannt werden, in einer Hauptschleife angeordnet sind und in dem m der Leitungen, m positive ganze Zahl höchstens gleich n/2, zwischen den Knoten der Hauptschleife Sicherungsleitungen (A21-A23) bilden, die im Normalbetrieb des Netzes nicht verwendet werden, darin besteht, daß, wenn die Hauptleitungen fehlerhaft sind, untersucht wird, ob wenigstens zwei Teilstücke (N14-N4, N5-N8, N9-13) vorhanden sind, die aus intakten Teilen der Hauptschleife gebildet sind, die jeweils durch zwei fehlerhafte Hauptleitungen begrenzt sind, untersucht wird, ob eine Gruppe aus k Teilstücken, k ganze Zahl größer als 1, vorhanden ist, die untereinander mittels k - 1 Sicherungsleitungen verbunden werden können, und ein rekonfiguriertes Netz erzeugt wird, indem in der Gruppe ein eindeutiger Pfad bestimmt wird, der die k Tellstücke der Gruppe und die k - 1 Sicherungsleitungen (A21, A22) verwendet, wobei dieser eindeutige Pfad einmal und höchstens einmal durch jede der primären Verbindungen und der sekundären Verbindungen jedes der k Teilstücke der Gruppe und jeder der k - 1 Sicherungsleitungen verläuft.

2. Rekonfigurationsverfahren nach Anspruch 1, dadurch gekennzeichnet, daß es darin besteht, daß in den Teilstücken der Gruppe untersucht wird, ob Knoten (N1, N3, N8, N12) vorhanden sind, die das Management des rekonfigurierten Netzes übernehmen können, und, falls vorhanden, der Knoten mit maximaler Priorität (N12) gewählt wird.

3. Rekonfigurationsverfahren nach Anspruch 1, dadurch gekennzeichnet, daß es darin besteht, daß in der Gruppe Teilstück für Teilstück (N14-N4, N5-N8, N9-N13) ein Knoten mit maximaler Priorität gesucht wird, der das Management des rekonfigurierten Netzes übernehmen kann, über die Sicherungsleitungen (A21-A23) Vergleiche zwischen den maximalen Prioritäten der verschiedenen Teilstücke ausgeführt werden, um die Wahl des Knotens mit maximaler Priorität in (N12) der Gruppe zu ermöglichen, und alle bis auf eine der Leitungen, die am selben Teilstück ankommen und über die für den Vergleich derselbe prioritätswert ankommt, entfernt werden.

4. Rekonfigurationsverfahren nach Anspruch 3, dadurch gekennzeichnet, daß es in jedem Teilstück darin besteht, ein Token (J1, J2, J3) umlaufen zu lassen, das durch eine Nachricht gebildet ist, in die die Knoten ihre Adresse im Netz und ihre Priorität einschreiben können, wenn sich dieses Token durch sie bewegt, wobei dieses Einschreiben dadurch erfolgt, daß eine bereits im Token durch einen vorhergehenden Knoten erfolgte Einschreibung ersetzt wird, jedoch nur stattfindet, wenn die Priorität des durchlaufenen Knotens höher als jene ist, die die bereits im Token erfolgte Einschreibung angibt.

5. Rekonfigurationsverfahren nach Anspruch 4, dadurch gekennzeichnet, daß es darin besteht, daß einer der Knoten durchlässig gemacht wird, sobald sich erweist, daß dieser Knoten nicht das Management des rekonfigurierten Netzes übernehmen kann, entweder wegen der Tatsache, daß er kein Kandidat für dieses Management ist, oder wegen seiner Position in dem neu zu konfigurierenden Netz, wobei dieses Durchlässigmachen für den Knoten darin besteht, nicht auf die ihn durchlaufenden Token einzuwirken, und darauf gewartet wird, daß ein Knoten für die Übernahme des Managements des rekonfigurierten Netzes gefunden wird.
